# EUROPEAN PATENT APPLICATION

(11) **EP 2 211 416 A1**
(43) Date of publication of application: **28.07.2010**
(21) Application number: 08834366.0
(22) Date of filing: 15.08.2008
(51) Int. Cl.: H01M 10/44, H02J 7/00, H02J 7/02

(54) **POWER SUPPLY SYSTEM AND CELL ASSEMBLY CONTROL METHOD**

(30) Priority: 25.09.2007 JP 2007247045
(71) Applicant: Panasonic Corporation, Kadoma-shi Osaka 571-8501 (JP)
(72) Inventor: Sugiyama Shigeyuki, chuo-ku,Osaka-shi,Osaka 540-6207 (JP); Aoki,Mamoru, chuo-ku,Osaka-shi,Osaka 540-6207 (JP); Suzuki,Kohei, Chuo-ku,Osaka-shi,Osaka 540-6207 (JP)
(74) Representative: Schwabe - Sandmair - Marx
(86) International application number: PCT/JP2008/002220
(87) International publication number: WO 2009/040979

(57) **Abstract**

The power supply system of this invention includes a cell assembly in which a first assembled battery, formed from a plurality of first cells connected in series, and a second assembled battery, formed from a plurality of second cells connected in series, are connected in parallel, and a generator. An average charging voltage V1 of a first assembled battery is smaller than an average charging voltage V2 of a second assembled battery. The power supply system further has a forced discharge unit capable of forcibly discharging the first assembled battery, and a control unit for measuring a voltage of the first assembled battery, and forcibly discharging the first assembled battery when the foregoing voltage reaches a forced discharge start voltage Va using the forced discharge unit until reaching a forced discharge end voltage Vb.

## Description

### Technical Field

The present invention relates to a power supply system made up of a cell assembly in which a plurality of cells are combined, and a method of controlling such a cell assembly, and more specifically relates to technology of causing the cell assembly to function as a power source without overcharging the cell as a secondary battery.

### Background Art

An alkaline storage battery such as a nickel hydride storage battery and a nickel cadmium storage battery, and a nonaqueous electrolyte secondary battery such as a lithium ion secondary battery and a lithium polymer secondary battery have higher energy density per unit weight than a lead storage battery, and are attracting attention as a power source to be mounted on mobile objects such as vehicles and portable devices. In particular, if cells made up of a plurality of nonaqueous electrolyte secondary batteries are connected in series to configure a cell assembly with high energy density per unit weight, and mounted on a vehicle as a cell starter power supply (so-called power source that is not a drive source of the vehicle) in substitute for a lead storage battery, it is considered to be promising for use in races and the like.

While a power source of vehicles is discharged with a large current as a cell starter during the start-up on the one hand, it is charged by receiving the current sent from a generator (constant voltage charger) while the vehicle is being driven. Although the lead storage battery has a reaction mechanism that is suitable for charge/discharge with a relatively large current, it cannot be said that the foregoing secondary batteries are suitable for charge/discharge with a large current from the perspective of their reaction mechanism. Specifically, the foregoing secondary batteries have the following drawbacks at the end stage of charging.

Foremost, with an alkaline storage battery such as a nickel hydride storage battery or a nickel cadmium storage battery, oxygen gas is generated from the positive electrode at the end stage of charging, but when the atmospheric temperature becomes high, the charging voltage of the battery will drop pursuant to the drop in the voltage that generates oxygen gas from the positive electrode; that is, the oxygen overvoltage. If n-number of alkaline storage batteries in which the charging voltage of the batteries dropped to V₁ are to be charged with a constant voltage charger (rated charging voltage V₂) and the relation of V₂ > nV₁ is satisfied, the charge will not end and the oxygen gas will continue to be generated, and there is a possibility that the individual secondary batteries (cells) configuring the assembled battery will deform due to the rise in the inner pressure of the battery.

With a nonaqueous electrolyte secondary battery such as a lithium ion secondary battery or a lithium polymer secondary battery, while the electrolytic solution containing a nonaqueous electrolyte tend to decompose at the end stage of charging, this tendency becomes prominent when the atmospheric temperature increases, and there is a possibility that the cells configuring the assembled battery will deform due to the rise in the inner pressure of the battery.

In order to overcome the foregoing problem, as shown in Patent Document 1, it would be effective to pass additional current from a separate circuit (lateral flow circuit) at the time that the charge of the assembled battery to be used as the power source is complete.

When applying Patent Document 1 to vehicle installation technology, the lateral flow circuit can be materialized as the following two modes. The first mode is the mode of configuring the lateral flow circuit in the form of supplying current to the other in-vehicle electrically powered equipment (lamp, car stereo, air conditioner and the like). The second mode is the mode of configuring the lateral flow circuit in the form of simply supplying current to a resistor that consumes current.

Nevertheless, when adopting the first mode, there is a possibility that the constant voltage charger will supply excessive current to the foregoing electrically powered equipment and cause the electrically powered equipment to malfunction. Moreover, when adopting the second mode, the heat that is generated when the resistor consumes the current will increase the atmospheric temperature of the foregoing secondary battery, and the possibility of the cell deforming cannot be resolved. Thus, even if a secondary battery with high energy density per unit weight is randomly used to configure the cell assembly, it is difficult to combine it with a constant voltage charger.
Patent Document 1: Japanese Patent Application Laid-open No. H07-059266

### Disclosure of the Invention

An object of this invention is to provide a safe and secure power supply system that uses a secondary battery with high energy density per unit weight, and which is able to inhibit the deformation of such secondary battery even upon receiving all currents from a generator as a charging current.

In order to achieve the foregoing object, the power supply system according to one aspect of the present invention comprises a cell assembly in which a first assembled battery, formed from a plurality of first cells connected in series, and a first assembled battery, formed from a plurality of second cells connected in series, are connected in parallel, a generator for charging the cell assembly, a forced discharge unit for forcibly discharging the first assembled battery, a voltage measurement unit for measuring a voltage of the first assembled battery, and a control unit for controlling a voltage of the cell assembly by controlling the forced discharge unit based on a measurement result of the voltage measurement unit. The cell assembly is configured such that an average charging voltage V1 as a terminal voltage when the first assembled battery reaches a charging capacity that is half of a full charge capacity is set to be a voltage that is smaller than an average charging voltage V2 as a terminal voltage when the second assembled battery reaches a charging capacity that is half of a full charge capacity, and the control unit controls the forced discharge unit so as to start the forced discharge of the first assembled battery when a measured voltage of the first assembled battery measured by the voltage measurement unit reaches a forced discharge start voltage Va, and ends the forced discharge upon reaching a forced discharge end voltage Vb.

A control method of a cell assembly according to another aspect of the present invention is a method of controlling a cell assembly in which a first assembled battery, formed from a plurality of first cells connected in series, and a second assembled battery, formed from a plurality of second cells connected in series, are connected in parallel, and an average charging voltage V1 as a terminal voltage when the first assembled battery reaches a charging capacity that is half of a full charge capacity is set to be a voltage that is smaller than an average charging voltage V2 as a terminal voltage when the second assembled battery reaches a charging capacity that is half of a full charge capacity, the method comprising: a step (a) of measuring a voltage of the first assembled battery; and a step (b) of performing control so to forcibly discharge the first assembled battery when the voltage of the first assembled battery measured in the step (a) reaches a forced discharge start voltage Va until the voltage of the first assembled battery reaches a forced discharge end voltage Vb.

According to the foregoing configuration, the cell assembly is configured by electrically connecting in parallel a first assembled battery and a second assembled battery (both configured by connecting cells in series) as the two types of assembled batteries. Moreover, the cell assembly is configured such that the average charging voltage V1 of the first assembled battery is set to be a voltage that is smaller than the average charging voltage V2 of the second assembled battery. Thereby, in a normal state (until reaching the forced discharge start voltage that is set to be slightly lower than the full charge voltage), the first assembled battery mainly receives the charging current from the generator, and, when the first assembled battery approaches full charge, the second assembled battery as the lateral flow circuit mainly receives the charging current from the generator.

In addition, the control unit for controlling the voltage of the cell assembly controls the forced discharge unit so as to start the forced discharge of the first assembled battery when the measured voltage of the first assembled battery measured by the voltage measurement unit reaches the forced discharge start voltage Va, and end the forced discharge upon reaching the forced discharge end voltage Vb. Thus, after the first assembled battery is charged up to the forced discharge start voltage Va (charged close to full charge), the first assembled battery is gradually subject to forced discharge until the first assembled battery reaches the state of charge (SOC) capable of receiving the charge.

Consequently, the problem of raising the atmospheric temperature of the cell assembly (particularly the first assembled battery 2a as the primary power source) as in cases of using a resistor, which is associated with excessive heat generation, as the lateral flow circuit can be prevented. Thus, it is possible to avoid the problem of the cell deforming due to heat.

Accordingly, even when using an alkaline storage battery such as a nickel hydride storage battery or a nickel cadmium storage battery or a nonaqueous electrolyte secondary battery such as a lithium ion secondary battery or a lithium polymer secondary battery with high energy density per unit weight as the secondary battery, it is possible to realize a safe and secure power supply system capable of receiving all currents from the generator as a charging current without inducing problems such as the deformation of the secondary battery.

The present invention is particularly effective when using a cell starter power supply that needs to constantly receiving a charging current from the generator.

The object, features and advantages of the present invention will become clearer based on the ensuing detailed explanation and attached drawings.

### Brief Description of the Drawings

[Fig. 1] Fig. 1. is a block diagram explaining the configuration of a power supply system according to an embodiment of the present invention.
[Fig. 2] Fig. 2 is a diagram showing the initial charge-discharge behavior of a lithium ion secondary battery as an example of a cell at a normal temperature.
[Fig. 3] Fig. 3 is a functional block diagram of a power supply system according to an embodiment of the present invention.
[Fig. 4] Fig. 4 is a block diagram explaining the configuration of a power supply system according to another embodiment of the present invention.

### Best Mode for Carrying Out the Invention

The best mode for carrying out the present invention is now explained with reference to the attached drawings.

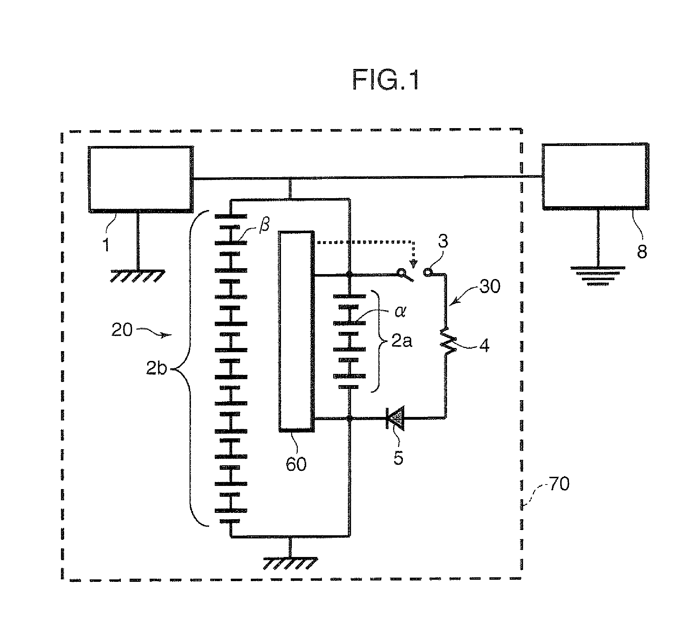

Fig. 1 is a block diagram explaining the configuration of a power supply system according to an embodiment of the present invention.

As shown in Fig. 1, the power supply system 70 comprises a generator 1, a cell assembly 20, a forced discharge unit 30 and a control unit 60. The generator 1 is used for charging the cell assembly 20 and, for instance, is a generator that is mounted on a vehicle and having a constant voltage specification for generating power based on the rotary motion of the engine. The cell assembly 20 includes a first assembled battery 2a in which a plurality (four in the configuration of Fig. 1) of cells α (first cells) are connected in series and a second assembled battery 2b in which a plurality (twelve in the configuration of Fig. 1) of cells β (second cells) are connected in series, and the first assembled battery 2a and the second assembled battery 2b are connected in parallel. A charging current is randomly supplied from the generator 1 to the first assembled battery 2a and the second assembled battery 2b. The forced discharge unit 30 is used for forcibly discharging the first assembled battery 2a, and comprises a forced discharge unit made up of a resistor 4 and a diode 5, and a switch 3 for turning ON/OFF the connection of the first assembled battery 2a and the forced discharge circuit based on a command from the control unit 60. Connected to the power supply system 70 is an in-car device 8 as an example of a load. The in-car device 8 is, for example, a load device such as a cell starter for starting the vehicle engine, lights, car navigation system or the like. The positive electrode of the first assembled battery 2a is connected to the in-car device 8, and the discharge current of the first assembled battery 2a is supplied to the in-car device 8.

Moreover, the voltage power terminal of the generator 1 is connected to the positive electrode of the second assembled battery 2b and the in-car device 8. In the foregoing case, when viewed from the generator 1, the cell assembly 20 and the in-car device 8 are connected in parallel. The voltage that is generated with the generator 1 is supplied in parallel to the cell assembly 20 and the in-car device 8.

A case of using a generator of a constant voltage specification as the generator 1 and a lithium ion secondary battery, which is an example of a nonaqueous electrolyte secondary battery, as the cell α configuring the first assembled battery 2a is now explained in detail.

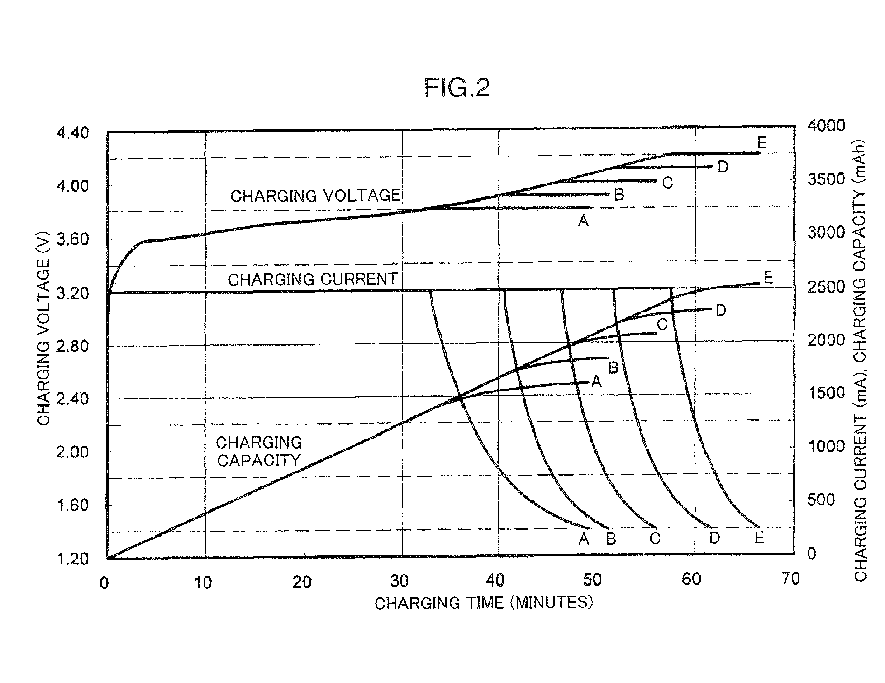

Fig. 2 is a diagram showing the charge behavior in the case of charging, with a generator of a constant voltage specification, a lithium ion secondary battery using lithium cobalt oxide as the positive electrode active material and using graphite as the negative electrode active material. In Fig. 2, a graph showing a case where the voltage Ve (terminal voltage of each cell) in which the rated voltage of the generator 1 is distributed per lithium ion battery (cell) is 3.8V is represented with symbol A, a graph showing a case of 3.9V is represented with symbol B, a graph showing a case of 4.0V is represented with symbol C, a graph showing a case of 4.1V is represented with symbol D, and a graph showing a case of 4.2V is represented with symbol E.

As shown in Fig. 2, in the case where the voltage Ve is 3.8V (shown with symbol A in Fig. 2), the current is constant from the charge start up to approximately 33 minutes, and the voltage is thereafter constant. In the case where the voltage Ve is 3.9V (shown with symbol B in Fig. 2), the current is constant from the charge start up to approximately 41 minutes, and the voltage is thereafter constant. In the case where the voltage Ve is 4.0V (shown with symbol C in Fig. 2), the current is constant from the charge start up to approximately 47 minutes, and the voltage is thereafter constant. In the case where the voltage Ve is 4.1V (shown with symbol D in Fig. 2), the current is constant from the charge start up to approximately 53 minutes, and the voltage is thereafter constant. In the case where the voltage Ve is 4.2V (shown with symbol E in Fig. 2), the current is constant from the charge start up to approximately 57 minutes, and the voltage is thereafter constant.

The generator 1 is configured so as to charge the cells α (lithium ion secondary battery) with a constant current until reaching the voltage Ve, and perform constant voltage charge to the lithium ion secondary battery while attenuating the current. For example, when the voltage Ve is 3.9V per lithium ion secondary battery (shown with symbol B in Fig. 2), the state of charge (SOC: State of Charge) (value obtained by dividing the charging capacity having a voltage Ve of 3.9V by the charging capacity having a voltage Ve of 4.2V in this example) will be 73%. Meanwhile, when the voltage Ve is 4.1V per lithium ion secondary battery (shown with symbol IV in Fig. 2), the SOC will be 91%. Table 1 show the relation between the voltage Ve and the SOC based on Fig. 2.

**[Table 1]**

| | | | | | | | | | |
|---|---|---|---|---|---|---|---|---|---|
| Rated voltage (V) per cell | 4.2 | 4.15 | 4.1 | 4.05 | 4.0 | 3.95 | 3.9 | 3.85 | 3.8 |
| SOC(%) | 100 | 95.5 | 91 | 86.5 | 82 | 77.5 | 73 | 68.5 | 64 |

With the lithium ion secondary battery, when the SOC after charge approaches 100%, the component (primarily carbonate) of the electrolytic solution containing a nonaqueous electrolyte will easily decompose. Thus, in order to avoid a charging current from additionally being supplied from the generator 1 to the lithium ion secondary battery in a state where the SOC is close to 100%, the forced discharge start voltage Va is set to a range that is slightly lower than the voltage in which the SOC after the charge is near 100%.

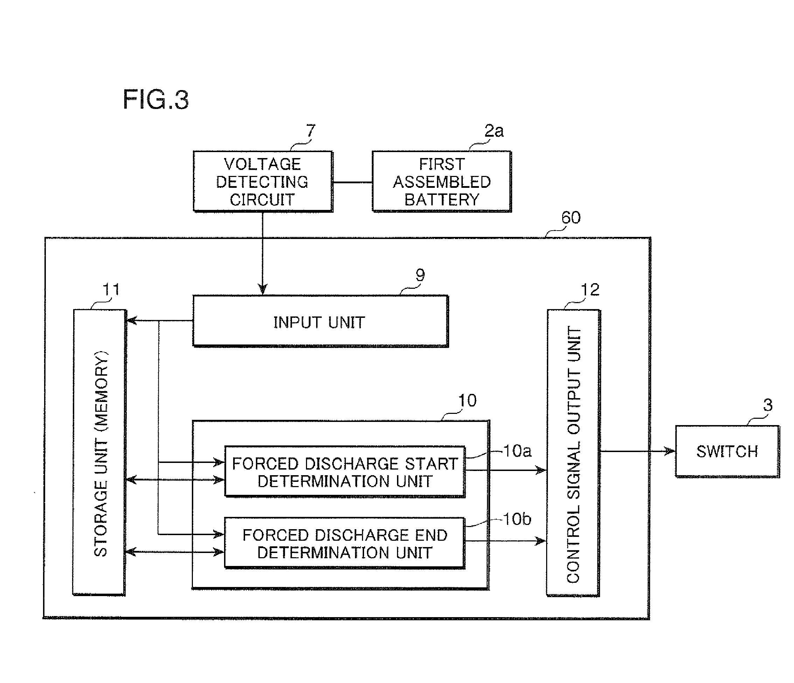

The specific operation of the power supply system 70 is now explained with reference to the functional block diagram of Fig. 3.

As shown with the functional block diagram of Fig. 3, the control unit 60 comprises an input unit 9 to which the voltage of the first assembled battery 2a measured with the voltage detecting circuit (voltage measurement unit) 7 is successively input, a storage unit (memory) 11 for storing the forced discharge start voltage Va and the forced discharge end voltage Vb of the first assembled battery 2a, a forced discharge determination unit 10 for forcibly discharging the first assembled battery 2a based on the measured voltage input into the input unit 9 and the forced discharge start voltage Va and the forced discharge end voltage Vb read from the storage unit 11, and a control signal output unit 12 for outputting a control signal from the forced discharge determination unit 10 to the switch 3. The voltage detecting circuit 7 is configured, for example, using an AD (analog/digital) converter or a comparator for detecting the terminal voltage of the first assembled battery 2a.

The forced discharge determination unit 10 is made up of a forced discharge start determination unit 10a and a forced discharge end determination unit 10b. When the forced discharge start determination unit 10a determines that the voltage of the first assembled battery 2a measured with the voltage detecting circuit 7 has reached the forced discharge start voltage Va read from the storage unit 11, it outputs a control signal to the switch 3 via the control signal output unit 12 for turning ON the connection with the first assembled battery 2a. Thereby, only the first assembled battery 2a is connected to the forced discharge circuit made up of the resistor 4 and the diode 5, and the forced discharge of the first assembled battery 2a is thereby started.

Meanwhile, after the forced discharge of the first assembled battery 2a is started, if the forced discharge end determination unit 10b determines that the voltage of the first assembled battery 2a based on the voltage detecting circuit 7 input via the input unit 9 has reached the forced discharge end voltage Vb read from the storage unit 11 (forced discharge has ended), it outputs a control signal to the switch 3 via the control signal output unit 12 for turning OFF the connection with the first assembled battery 2a. Thereby, the first assembled battery 2a will enter a state of being able to accept the charge from the generator 1.

As described above, when the first assembled battery 2a reaches the forced discharge start voltage Va, the switch 3 is turned ON based on a command from the control unit 60, and only the first assembled battery 2a is subject to forced discharged until reaching the forced discharge end voltage Vb through the forced discharge unit made up of the resistor 4 and the diode 5. When the forced discharge is complete, the switch 3 is turned OFF based on a command from the control unit 60 and the first assembled battery 2a enters a state of being able to accept the charge from the generator 1. As the switch 3, a general switch such as a field effect transistor (FET) or a semiconductor switch may be used.

Even when the first assembled battery 2a is being forcibly discharged, since the second assembled battery 2b is in a state of being able to accept the charge from the generator 1, the charging current will not be excessively supplied to the in-car device 8.

The cell assembly 20 is configured so that the average charging voltage V1 of the first assembled battery 2a is set to be smaller than the average charging voltage V2 of the second assembled battery 2b. Consequently, the first assembled battery 2a as the main receiving end of the charging current from the generator 1 will be charged in preference to the second assembled battery 2b.

As described above, as a result of setting the average charging voltage V1 of the first assembled battery 2a to be smaller than the average charging voltage V2 of the second assembled battery 2b, in a normal state (until reaching the forced discharge start voltage that is set to be slightly lower than the full charge voltage), the first assembled battery 2a mainly receives the charging current from the generator 1, and, when the first assembled battery 2a approaches full charge, the second assembled battery 2b as the lateral flow circuit mainly receives the charging current from the generator 1.

In addition, the control unit 60 for controlling the voltage of the cell assembly 20 controls the forced discharge determination unit 10 so as to start the forced discharge of the first assembled battery 2a when the measured voltage of the first assembled battery 2a based on the voltage detecting circuit 7 reaches the forced discharge start voltage Va, and end the forced discharge upon reaching the forced discharge end voltage Vb. Thus, after the first assembled battery 2a is charged up to the forced discharge start voltage Va (charged close to full charge), the first assembled battery 2a is gradually subject to forced discharge until the first assembled battery 2a reaches the state of charge (SOC) capable of receiving the charge.

Incidentally, since the second assembled battery 2b is able to receive the charge from the generator 1 even while the first assembled battery 2a is being forcibly discharged, the charging current will not be excessively supplied to the in-car device 8.

For example, in the configuration of Fig. 1, if an alkaline storage battery (specifically, a nickel hydride storage battery having an average charging voltage of 1.4V per cell) is used as the cell β of the second assembled battery 2b, the average charging voltage V2 of the second assembled battery 2b made up of twelve cells β will be 16.8V. Meanwhile, the average charging voltage V1 of the first assembled battery 2a made up of four lithium ion secondary batteries (average charging voltage of 3.8V per cell) will be a value of (15.2V). Thus, the ratio V2/V1 of the average charging voltage V1 of the first assembled battery 2a and the average charging voltage V2 of the second assembled battery 2b will be 1.11. Under normal circumstances, since the generator 1 is of a constant voltage specification, as a result of setting the average charging voltage V1 of the first assembled battery 2a to be smaller than the average charging voltage V2 of the second assembled battery 2b as with the foregoing mode, it is possible to configure a safe and secure power supply system 70 that is able to receive all currents from the generator 1 as a charging current while inhibiting the deformation of the secondary battery without having to use any complicated means for transforming one of the assembled batteries (for example, means for causing the V2/V1 to become approximately 1.1 by using a DC/DC converter on one of the assembled batteries).

As with the foregoing example, preferably, an alkaline storage battery (specifically, a nickel hydride storage battery having an average charging voltage of 1.4V per cell) is used as the cell β configuring the second assembled battery 2b.

Since an alkaline storage battery entails a rise in temperature simultaneously with the completion of full charge as the characteristic of nickel hydroxide as the positive electrode active material, the oxygen overvoltage will drop and the charging voltage will also drop. However, according to the configuration of this embodiment in which a lateral flow circuit is used as the second assembled battery 2b in substitute for a resistor with significant heat generation, the heat generation will decrease and the drop in the oxygen overvoltage can be mitigated. Consequently, it is possible to prevent the problem of the cell deforming due to the rise in the atmospheric temperature of the cell assembly 20 (particularly the first assembled battery 2a as the primary power source). Thus, an alkaline storage battery can be used, without any problem, as the cell β with high energy density per unit weight configuring the second assembled battery 2b as the lateral flow circuit.

Moreover, preferably, the ratio V2/V1 of the average charging voltage V1 of the first assembled battery 2a and the average charging voltage V2 of the second assembled battery 2b is set within the range of 1.01 or more and 1.18 or less. This is because, when the ratio V2/V1 is less than 1.01, the charging current from the generator 1 will easily flow to the second assembled battery 2b, and the first assembled battery 2a cannot be efficiently charged. Contrarily, when the ratio V2/V1 exceeds 1.18, the first assembled battery 2a will easily overcharge.

The method of calculating the average charging voltage is now explained.

If the cell is a nonaqueous electrolyte secondary battery such as a lithium ion secondary battery, the charge end voltage is manually set according to the characteristics of the active material that is used as the positive electrode or the negative electrode, but this is usually 4.2V. As shown in Fig. 2, in the case of E in Fig. 2 in which the charge end voltage is 4.2V, the full charge capacity is 2550mAh. Here, the voltage (3.8V) at the point in time that the charging capacity is 1275mAh (half the charging capacity when charging 4.2V) will be the average charging voltage per nonaqueous electrolyte secondary battery. Meanwhile, if the cell is an alkaline storage battery such as a nickel hydride storage battery, as the characteristics of nickel hydroxide as the positive electrode active material, the charging voltage will drop simultaneously with the completion of the full charge pursuant to the rise in temperature, and become a fully charged state. The voltage at the point in time of half the full charge capacity will be the average charging voltage of the alkaline storage battery.

As the cell α configuring the first assembled battery 2a, preferably, a nonaqueous electrolyte secondary battery such as a lithium ion secondary battery is used as in this embodiment. This is because the nonaqueous electrolyte secondary battery has high energy density in comparison to an alkaline storage battery, and is preferable as the receiving end of the charging current in the power supply system 70 of the present invention. Although a nonaqueous electrolyte secondary battery entails problems such as the electrolyte component decomposing under a high temperature environment, as a result of adopting the configuration of this embodiment in which a lateral flow circuit is used as the second assembled battery 2b in substitute for a resistor with significant heat generation, it is possible to prevent the problem of the cell deforming due to the rise in the atmospheric temperature of the cell assembly 20 (particularly the first assembled battery 2a as the primary power source). Thus, a nonaqueous electrolyte secondary battery with high energy density per unit weight can be used, without any problem, as the cell α configuring the first assembled battery 2a.

Moreover, when using a nonaqueous electrolyte secondary battery as the cell α, preferably, lithium composite oxide containing cobalt is used as the active material of the positive electrode of the nonaqueous electrolyte secondary battery.

This is because the discharge voltage of the nonaqueous electrolyte secondary battery can be increased as a result of using lithium composite oxide containing cobalt such as lithium cobalt oxide as the active material of the positive electrode, and the energy density can be easily increased.

Moreover, preferably, if the number of the cell α in the first assembled battery 2a is n_{A}, the forced discharge start voltage Va of the first assembled battery 2a is set within the range of 4.05n_{A}V or more and 4.15n_{A}V or less. This is because, as evident from Fig. 2 and Table 1 that show the cell α, when the forced discharge start voltage Va is set to less than 4.05n_{A}V, the amount of charge acceptance of the first assembled battery 2a will be insufficient. Contrarily, if the forced discharge start voltage Va is set in excess of 4.15n_{A}V, the forced discharge of the first assembled battery 2a will not start until approaching the overcharge range of the cell α.

Moreover, preferably, if the number of the cell α in the first assembled battery 2a is n_{A}, the forced discharge end voltage Vb is set within the range of 3.85n_{A}V or more and 3.95n_{A}V or less. This is because, as evident from Fig. 2 and Table 1 that show the cell α, when the forced discharge end voltage Vb is set to less than 3.85n_{A}V, the quantity of electricity of the forced discharge of the first assembled battery 2a will become excessive (forced discharge time per implementation will become long), and the time that the charging current from the generator 1 flows to the first assembled battery 2a as the main receiving end will decrease. Contrarily, when the forced discharge end voltage Vb is set in excess of 3.95n_{A}V, the amount of charge acceptance of the first assembled battery 2a will become insufficient as a result of reaching the subsequent forced discharge start voltage Va after the forced discharge early.

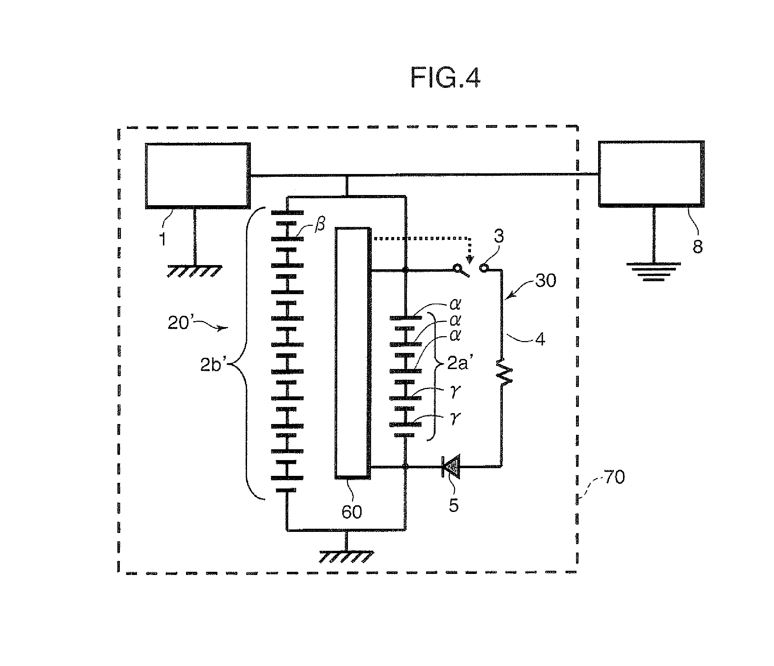

Fig. 4 shows another configuration example of the cell assembly according to this embodiment. As shown in Fig. 4, a cell assembly 20' is configured such that a first assembled battery 2a' and a second assembled battery 2b' are connected in parallel. The first assembled battery 2a' is configured by additionally connecting in series two alkaline storage batteries having an average charging voltage of 1.4V as the cells γ (third cells) to the three cells α, in which one cell α was reduced from the first assembled battery 2a in the configuration of the cell assembly 20 shown in Fig. 1, that are connected in series. The second assembled battery 2b' is configured such that eleven cells β, in which one cell β was reduced from the second assembled battery 2b in the configuration of the cell assembly 20 shown in Fig. 1, that are connected in series.

According to the foregoing configuration, the average charging voltage V1 of the first assembled battery 2a' will be 14.2V, and the average charging voltage V2 of the second assembled battery 2b' will be 15.4V. Consequently, the ratio V2/V1 of the average charging voltage V1 of the first assembled battery 2a' and the average charging voltage V2 of the second assembled battery 2b' can be set to be within the range of 1.01 or more and 1.18 or less.

As described above, with the power supply system 70 of this embodiment, preferably, when using a nonaqueous electrolyte secondary battery as the cell α, the forced discharge start voltage Va is provided so that the cell α will be near 4.0V per cell (that is, the forced discharge start voltage Va is an integral multiple of 4.0V).

If a multi-purpose generator based on a lead storage battery specification is to be used as the generator 1, the rated voltage is 14.5V, and there is a problem in that it will not be an integral multiple of 4.0V, and a fraction (2.5V) will arise. Thus, the foregoing fraction can be dealt with by additionally connecting in series, as needed, a cell γ (alkaline storage battery in which the average charging voltage is near 1.4V) to a plurality of cells α (first assembled battery 2a) that are connected in series.

Specifically, as described above, when using as the first assembled battery 2a' configured by additionally connecting in series two nickel hydride storage batteries having an average charging voltage of 1.4V as the cells γ to three lithium ion secondary batteries connected in series and having an average charging voltage of 3.8V as the cells α, the average charging voltage V1 of the first assembled battery 2a' will be 14.2V. Here, the nickel hydride storage battery as the cell γ has a highly flat charging voltage (change of the terminal voltage in relation to the change of SOC is small). Specifically, in the case of a nickel hydride storage battery, the charging voltage will remain flat and hardly change even if the SOC rises due to the charge. Meanwhile, with a lithium ion storage battery, since the charging voltage will rise pursuant to the rise of the SOC due to the charge, the cell α (lithium ion secondary battery) will be charged to a predetermined voltage (3.9V).

Thus, if the capacity of the cell γ is set to be greater than the capacity of the cell α, the foregoing flatness of the nickel hydride storage battery (charging voltage is flat and will hardly change during the charge regardless of the SOC) can be used to distribute the remaining 0.3V (value obtained by subtracting 14.2V as the average charging voltage V1 of the first assembled battery 2a from 14.5V as the rated voltage of the generator 1) to the charge of the three cells α. Consequently, the cells α (lithium ion secondary batteries) can be charged up to 3.9V per cell (73% based on SOC conversion).

As the cell assembly 20', in the foregoing configuration comprising the cell γ, preferably, if the number of the cell α in the first assembled battery 2a' is n_{A} and the number of the cell γ is n_{C}, the forced discharge start voltage Va is set within the range of (4.05n_{A} + 1.4n_{C})V or more and (4.15n_{A} + 1.4n_{C})V or less.

As described above, the first assembled battery 2a' can be suitably combined to match the rated voltage of the generator 1 so as to enable the charge without excess or deficiency. Thus, if the range of the forced discharge start voltage Va is set to the foregoing range, the reason why the foregoing range is preferably is because, while this is the same as the configuration of not comprising a cell γ, it is possible to avoid the danger when the charging voltage of the cells α or the cells γ configuring the first assembled battery 2a' becomes abnormally high.

With the power supply system 70 of this embodiment, preferably, the quantity of electricity that is required for the forced discharge is calculated from the forced discharge start voltage Va and the forced discharge end voltage Vb, and the forced discharge is performed for a given period at a constant current value.

Based on the configuration of this embodiment using a lithium ion secondary battery as an example of the nonaqueous electrolyte secondary battery as the cell α configuring the first assembled battery 2a, the foregoing configuration is now explained in detail with reference to Fig. 2 and Table 1 on the assumption that the forced discharge start voltage Va is set to 16.4V (4.1V per nonaqueous electrolyte secondary battery), and the forced discharge end voltage Vb is set to 15.6V (3.9V per nonaqueous electrolyte secondary battery).

As a specific example of the foregoing configuration, for example, a configuration may be adopted where the relation shown in Table 1 is stored beforehand in the storage unit 11 shown in Fig. 3, and the quantity of electricity (18% in this example) for forcibly discharging the first assembled battery 2a is set based on the difference of the state of charge (SOC). Thereby, the control unit 60 can be configured to be timer-controlled for performing forced discharge for 54 minutes at a five-hour rate regardless of the charge from the generator 1 or the discharge to the in-car device 8.

According to the foregoing configuration, the first assembled battery 2a can be forcibly discharged easily and accurately in comparison to the configuration of performing forced discharged when the voltage of the first assembled battery 2a reaches the forced discharge start voltage Va (16.4V) while measuring the sequential voltage until the voltage of the first assembled battery 2a reaches the forced discharge end voltage Vb (15.6V).

The foregoing configuration is suitable in cases where a large current is discharged to the in-car device 8 and the closed circuit voltage unduly drops (resulting in a voltage that is unduly lower than the open circuit voltage corresponding to the actual SOC in correspondence to the resistor of the first assembled battery 2a).

Although the foregoing example used a lithium ion secondary battery as the cell α, similar results were obtained even when using a lithium polymer secondary battery among the nonaqueous electrolyte secondary batteries in which the electrolyte is in the form of a gel. Moreover, although the foregoing example used a nickel hydride storage battery as the cell α, similar results were obtained even using a nickel cadmium storage battery or the like,

As described above, the power supply system according to one aspect of the present invention comprises a cell assembly in which a first assembled battery, formed from a plurality of first cells connected in series, and a second assembled battery, formed from a plurality of second cells connected in series, are connected in parallel, a generator for charging the cell assembly, a forced discharge unit for forcibly discharging the first assembled battery, a voltage measurement unit for measuring a voltage of the first assembled battery, and a control unit for controlling a voltage of the cell assembly by controlling the forced discharge unit based on a measurement result of the voltage measurement unit. The cell assembly is configured such that an average charging voltage V1 as a terminal voltage when the first assembled battery reaches a charging capacity that is half of a full charge capacity is set to be a voltage that is smaller than an average charging voltage V2 as a terminal voltage when the second assembled battery reaches a charging capacity that is half of a full charge capacity, and the control unit controls the forced discharge unit so as to start the forced discharge of the first assembled battery when a measured voltage of the first assembled battery measured by the voltage measurement unit reaches a forced discharge start voltage Va, and ends the forced discharge upon reaching a forced discharge end voltage Vb.

According to the foregoing configuration, the cell assembly is configured by electrically connecting in series the first assembled battery 2a and the second assembled battery 2b (both configured by connecting cells in series) as the two types of assembled batteries. Moreover, the cell assembly is configured such that the average charging voltage V1 of the first assembled battery is set to be a voltage that is smaller than the average charging voltage V2 of the second assembled battery. Thereby, in a normal state (until reaching the forced discharge start voltage that is set to be slightly lower than the full charge voltage), the first assembled battery mainly receives the charging current from the generator, and, when the first assembled battery approaches full charge, the second assembled battery 2b as the lateral flow circuit mainly receives the charging current from the generator.

In addition, the control unit for controlling the voltage of the cell assembly controls the forced discharge unit so as to start the forced discharge of the first assembled battery when the measured voltage of the first assembled battery measured by the voltage measurement unit reaches the forced discharge start voltage Va, and end the forced discharge upon reaching the forced discharge end voltage Vb. Thus, after the first assembled battery is charged up to the forced discharge start voltage Va (charged close to full charge), the first assembled battery is gradually subject to forced discharge until the first assembled battery reaches the state of charge (SOC) capable of receiving the charge.

Consequently, the problem of raising the atmospheric temperature of the cell assembly (particularly the first assembled battery 2a as the primary power source) as in cases of using a resistor, which is associated with excessive heat generation, as the lateral flow circuit can be prevented. Thus, it is possible to avoid the problem of the cell deforming due to heat.

Accordingly, even when using an alkaline storage battery such as a nickel hydride storage battery or a nickel cadmium storage battery or a nonaqueous electrolyte secondary battery such as a lithium ion secondary battery or a lithium polymer secondary battery with high energy density per unit weight as the secondary battery, it is possible to realize a safe and secure power supply system capable of receiving all currents from the generator as a charging current without inducing problems such as the deformation of the secondary battery.

The present invention is particularly effective when using a cell starter power supply that needs to constantly receiving a charging current from the generator.

In the foregoing configuration, the forced discharge unit may be made up of a forced discharge circuit formed from a resistor and a diode, and a switch for switching ON/OFF of the connection between the forced discharge circuit and the first assembled battery, and the control unit may control the switch to turn ON the connection when a measured voltage of the first assembled battery measured by the voltage measurement unit reaches the forced discharge start voltage Va.

In the foregoing configuration, preferably, a ratio V2/V1 of an average charging voltage V1 of the first assembled battery 2a to an average charging voltage V2 of the second assembled battery 2b is set within the range of 1.01 or more and 1.18 or less.

This is because, when the ratio V2/V1 is less than 1.01, the charging current from the generator 1 will easily flow to the second assembled battery 2b, and the first assembled battery 2a cannot be efficiently charged. Contrarily, when the ratio V2/V1 exceeds 1.18, the first assembled battery 2a will easily overcharge.

Moreover, preferably, a nonaqueous electrolyte secondary battery is used as the first cell configuring the first assembled battery.

This is because the nonaqueous electrolyte secondary battery has high energy density in comparison to an alkaline storage battery, and is preferable as the receiving end of the charging current in the power supply system of the present invention.

Although a nonaqueous electrolyte secondary battery entails problems such as the electrolyte component decomposing under a high temperature environment, as a result of adopting the configuration of this embodiment in which a lateral flow circuit is used as the first assembled battery in substitute for a resistor with significant heat generation, a nonaqueous electrolyte secondary battery can be preferably used.

Moreover, preferably, lithium composite oxide containing cobalt is used as an active material of a positive electrode of the nonaqueous electrolyte secondary battery.

According to the foregoing configuration, the discharge voltage of the nonaqueous electrolyte secondary battery can be increased as a result of using lithium composite oxide containing cobalt such as lithium cobalt oxide as the active material of the positive electrode, and the energy density can be easily increased.

In the foregoing configuration, preferably, if the number of the first cells in the first assembled battery 2a is n_{A}, the forced discharge start voltage Va is set within the range of 4.05n_{A}V or more and 4.15n_{A}V or less.

This is because, as evident from Fig. 2 and Table 1 that show the first cell, when the forced discharge start voltage Va is set to less than 4.05n_{A}V, the amount of charge acceptance of the first assembled battery 2a will be insufficient. Contrarily, when the forced discharge start voltage Va is set in excess of 4.15n_{A}V, the forced discharge of the first assembled battery 2a will not start until approaching the overcharge range of the cell α.

In the foregoing configuration, preferably, when the number of the cells in the first assembled battery is n_{A}, the forced discharge end voltage Vb is set within the range of 3.85n_{A}V or more and 3.95n_{A}V or less.

If the forced discharge end voltage Vb is set to less than 3.85n_{A}V, the quantity of electricity of the forced discharge of the first assembled battery will become excessive (forced discharge time per implementation will become long), and the time that the charging current from the generator flows to the first assembled battery as the main receiving end will decrease. Contrarily, when the forced discharge end voltage Vb is set in excess of 3.95n_{A}V, the amount of charge acceptance of the first assembled battery will become insufficient as a result of reaching the subsequent forced discharge start voltage Va after the forced discharge early.

In the foregoing configuration, preferably, third cells of alkaline storage batteries are further connected in series to the first assembled battery.

In the foregoing configuration, preferably, the capacity of the third cell is larger than the capacity of the first cell.

If the power supply system of the present invention uses a nonaqueous electrolyte secondary battery as the first cell, preferably, the forced discharge start voltage Va is provided so that the first cell will be near 4.0V per cell (that is, the forced discharge start voltage Va is an integral multiple of 4.0V).

Here, if a multi-purpose generator based on a lead storage battery specification is to be used as the generator, the rated voltage is 14.5V, and there is a problem in that it will not be an integral multiple of 4.0V, and a fraction (2.5V) will arise. Thus, the foregoing fraction can be dealt with by additionally connecting in series, as needed, a third cell (alkaline storage battery in which the average charging voltage is near 1.4V) to a plurality of first cells that are connected in series.

For example, when using as a first assembled battery configured by additionally connecting in series two nickel hydride storage batteries having an average charging voltage of 1.4V as the third cells to three lithium ion secondary batteries connected in series and having an average charging voltage of 3.8V as the cells α, the average charging voltage V1 of the first assembled battery will be 14.2V. Here, the nickel hydride storage battery as the third cell has a highly flat charging voltage (change of the terminal voltage in relation to the change of SOC is small). Specifically, in the case of a nickel hydride storage battery, the charging voltage will remain flat and hardly change even if the SOC rises due to the charge. Meanwhile, with a lithium ion storage battery, since the charging voltage will rise pursuant to the rise of the SOC due to the charge, the first cell (lithium ion secondary battery) will be charged to a predetermined voltage (3.9V).

Thus, when the capacity of the third cell is set to be greater than the capacity of the first cell, the foregoing flatness of the nickel hydride storage battery (charging voltage is flat and will hardly change during the charge regardless of the SOC) can be used to distribute the remaining 0.3V (value obtained by subtracting 14.2V as the average charging voltage V1 of the first assembled battery 2a from 14.5V as the rated voltage of the generator 1) to the charge of the three first cells. Consequently, the first cells (lithium ion secondary batteries) can be charged up to 3.9V per cell (73% based on SOC conversion).

In the foregoing configuration, preferably, when the number of the first cells in the first assembled battery is n_{A} and the number of the third cells is n_{C}, the forced discharge start voltage Va is set within the range of (4.05n_{A} + 1.4n_{C})V or more and (4.15n_{A} + 1.4n_{C})V or less.

According to the foregoing configuration, the first assembled battery can be suitably combined to match the rated voltage of the generator so as to enable the charge without excess or deficiency. Thus, when the range of the forced discharge start voltage Va is set to the foregoing range, the reason why the foregoing range is preferably is because, while this is the same as the configuration of not comprising a third cell, it is possible to avoid the danger when the charging voltage of the first cells or the third cells configuring the first assembled battery becomes abnormally high.

In the foregoing configuration, preferably, the quantity of electricity that is required for the forced discharge is calculated from the forced discharge start voltage Va and the forced discharge end voltage Vb, and the forced discharge is performed for a predetermined period at a predetermined current value.

Moreover, preferably, an alkaline storage battery is used as the second cell configuring the second assembled battery.

Since an alkaline storage battery entails a rise in temperature simultaneously with the completion of full charge as the characteristic of nickel hydroxide as the positive electrode active material, the oxygen overvoltage will drop and the charging voltage will also drop. However, according to the configuration of this embodiment in which a lateral flow circuit is used as the second assembled battery in substitute for a resistor with significant heat generation, it is possible to prevent the problem of the cell deforming due to the rise in the atmospheric temperature of the cell assembly (particularly the first assembled battery as the primary power source). Thus, an alkaline storage battery with high energy density per unit weight can be used, without any problem, as the second cell configuring the second assembled battery as the lateral flow circuit.

A control method of a cell assembly according to another aspect of the present invention is a method of controlling a cell assembly in which a first assembled battery, formed from a plurality of first cells connected in series, and a second assembled battery, formed from a plurality of second cells connected in series, are connected in parallel, and an average charging voltage V1 of the first assembled battery is set be be is smaller than the average charging voltage V2 of the second assembled battery, the method comprising: a step (a) of measuring a voltage of the first assembled battery, and a step (b) of performing control so to forcibly discharge the first assembled battery when the voltage of the first assembled battery measured in the step (a) reaches a forced discharge start voltage Va until the voltage of the first assembled battery reaches a forced discharge end voltage Vb.

In the foregoing method, preferably, the step (b) includes a step of using the forced discharge unit made up of a forced discharge circuit formed from a resistor and a diode and a switch for switching ON/OFF of the connection between the forced discharge circuit and the first assembled battery, and controlling the switch to turn ON the connection when the voltage of the first assembled battery measured in the step (a) reaches a forced discharge start voltage Va, and turn OFF the connection upon reaching a forced discharge end voltage Vb.

In the foregoing method, preferably, a ratio V2/V1 of an average charging voltage V1 and an average charging voltage V2 is set within the range of 1.01 or more and 1.18 or less.

In the foregoing method, preferably, a nonaqueous electrolyte secondary battery is used as the first cell configuring the first assembled battery.

In the foregoing method, preferably, lithium composite oxide containing cobalt is used as an active material of a positive electrode of the nonaqueous electrolyte secondary battery.

In the foregoing method, preferably, when the number of the first cells configuring the first assembled battery is n_{A}, the forced discharge start voltage Va is set within the range of 4.05n_{A}V or more and 4.15n_{A}V or less.

In the foregoing method, preferably, when the number of the first cells in the first assembled battery is n_{A}, the forced discharge end voltage Vb is set within the range of 3.85n_{A}V or more and 3.95n_{A}V or less.

In the foregoing method, preferably, third cells of alkaline storage batterieas are further connected in series to the first assembled battery in which a plurality of first cells are connected in series.

In the foregoing method, preferably, the capacity of the third cell is larger than the capacity of the first cell.

In the foregoing method, preferably, when the number of the first cells configuring the first assembled battery is n_{A} and the number of the third cells is n_{C}, the forced discharge start voltage Va is set within the range of (4.05n_{A} + 1.4n_{C})V or more and (4.15n_{A} + 1.4n_{c})V or less.

The foregoing method preferably includes: a step of calculating the quantity of electricity that is required for the forced discharge from the forced discharge start voltage Va and the forced discharge end voltage Vb; and a step of performing the forced discharge for a predetermined period at a predetermined current value.

In the foregoing method, preferably, an alkaline storage battery is used as the second cell configuring the second assembled battery.

According to the respective methods of the present invention described above, the same effects as the configuration of the respective power supply systems of the present invention described above can be yielded.

### Industrial Applicability

Since the power supply system of the present invention uses an assembled battery made up of nonaqueous electrolyte secondary batteries with a higher energy density per unit weight than lead storage batteries, the application potency of the present invention as a cell starter power supply of racing cars is high, and extremely effective.

## Claims

1. A power supply system, comprising:
a cell assembly in which a first assembled battery, formed from a plurality of first cells connected in series, and a second assembled battery, formed from a plurality of second cells connected in series, are connected in parallel;
a generator for charging the cell assembly;
a forced discharge unit for forcibly discharging the first assembled battery;
a voltage measurement unit for measuring a voltage of the first assembled battery;
and
a control unit for controlling a voltage of the cell assembly by controlling the forced discharge unit based on a measurement result of the voltage measurement unit,
wherein, the cell assembly is configured such that an average charging voltage V1 as a terminal voltage when the first assembled battery reaches a charging capacity that is half of a full charge capacity is set to be a voltage that is smaller than an average charging voltage V2 as a terminal voltage when the second assembled battery reaches a charging capacity that is half of a full charge capacity, and
wherein the control unit controls the forced discharge unit so as to start the forced discharge of the first assembled battery when a measured voltage of the first assembled battery measured by the voltage measurement unit reaches a forced discharge start voltage Va, and end the forced discharge upon reaching a forced discharge end voltage Vb.

2. The power supply system according to claim 1,
wherein the forced discharge unit is made up of a forced discharge circuit formed from a resistor and a diode, and a switch for switching ON/OFF of connection between the forced discharge circuit and the first assembled battery, and
wherein the control unit controls the switch to turn ON the connection when a measured voltage of the first assembled battery measured by the voltage measurement unit reaches the forced discharge start voltage Va.

3. The power supply system according to claim 1 or claim 2,
wherein a ratio V2/V1 of an average charging voltage V1 of the first assembled battery to an average charging voltage V2 of the second assembled battery is set within a range of 1.01 or more and 1.18 or less.

4. The power supply system according to any one of claims 1 to 3, wherein the first cell is a nonaqueous electrolyte secondary battery.

5. The power supply system according to claim 4, wherein lithium composite oxide containing cobalt is used as an active material of a positive electrode of the nonaqueous electrolyte secondary battery.

6. The power supply system according to claim 4 or claim 5, wherein, when the number of the first cells in the first assembled battery is n_{A}, the forced discharge start voltage Va is set within a range of 4.05n_{A}V or more and 4.15n_{A}V or less.

7. The power supply system according to any one of claims 4 to 6, wherein, when the number of the first cells in the first assembled battery is n_{A}, the forced discharge end voltage Vb is set within a range of 3.85n_{A}V or more and 3.95n_{A}V or less.

8. The power supply system according to any one of claims 4 to 6, wherein third cells of alkaline storage batteries are further connected in series to the first assembled battery.

9. The power supply system according to claim 8, wherein a capacity of the third cell is larger than a capacity of the first cell.

10. The power supply system according to claim 8 or claim 9, wherein, when the number of the first cells in the first assembled battery is n_{A} and the number of the third cells is n_{C}, the forced discharge start voltage Va is set within a range of (4.05n_{A} + 1.4n_{c})V or more and (4.15n_{A} + 1.4n_{C})V or less.

11. The power supply system according to any one of claims 1 to 10, wherein a quantity of electricity that is required for the forced discharge is calculated from the forced discharge start voltage Va and the forced discharge end voltage Vb, and the forced discharge is performed for a predetermined period at a predetermined current value.

12. The power supply system according to any one of claims 1 to 11, wherein an alkaline storage battery is used as the second cell.

13. A method of controlling a cell assembly in which a first assembled battery, formed from a plurality of first cells connected in series, and a second assembled battery, formed from a plurality of second cells connected in series, are connected in parallel, and an average charging voltage V1 as a terminal voltage when the first assembled battery reaches a charging capacity that is half of a full charge capacity is set to be a voltage that is smaller than an average charging voltage V2 as a terminal voltage when the second assembled battery reaches a charging capacity that is half of a full charge capacity,
the method comprising:
a step (a) of measuring a voltage of the first assembled battery; and
a step (b) of performing control so to forcibly discharge the first assembled battery when the voltage of the first assembled battery measured in the step (a) reaches a forced discharge start voltage Va until this voltage of the first assembled battery reaches a forced discharge end voltage Vb.

14. The method of controlling a cell assembly according to claim 13, wherein the step (b) includes a step of using a forced discharge unit made up of a forced discharge circuit formed from a resistor and a diode, and a switch for switching ON/OFF of connection between the forced discharge circuit and the first assembled battery, and controlling the switch to turn ON the connection when the voltage of the first assembled battery measured in the step (a) reaches a forced discharge start voltage Va, and turn OFF the connection upon reaching a forced discharge end voltage Vb.

15. The method of controlling a cell assembly according to claim 13 or claim 14, wherein a ratio V2/V1. of the average charging voltage V1 and the average charging voltage V2 is set within a range of 1.01 or more and 1.18 or less.

16. The method of controlling a cell assembly according to any one of claims 13 to 15, wherein a nonaqueous electrolyte secondary battery is used as the first cell.

17. The method of controlling a cell assembly according to claim 16, wherein lithium composite oxide containing cobalt is used as an active material of a positive electrode of the nonaqueous electrolyte secondary battery.

18. The method of controlling a cell assembly according to claim 16 or claim 17,
wherein, when the number of the first cells configuring the first assembled battery is n_{A}, the forced discharge start voltage Va is set within a range of 4.05n_{A}V or more and 4.15n_{A}V or less.

19. The method of controlling a cell assembly according to any one of claims 16 to 18, wherein, when the number of the first cells in the first assembled battery is n_{A}, the forced discharge end voltage Vb is set within a range of 3.85n_{A}V or more and 3.95n_{A}V or less.

20. The method of controlling a cell assembly according to any one of claims 13 to 19, wherein third cells of alkaline storage batteries are further connected in series to the first assembled battery in which a plurality of first cells are connected in series.

21. The method of controlling a cell assembly according to claim 20, wherein a capacity of the third cell is larger than a capacity of the first cell.

22. The method of controlling a cell assembly according to claim 20 or claim 21,
wherein , when the number of the first cells configuring the first assembled battery is n_{A} and the number of the third cells is n_{C}, the forced discharge start voltage Va is set within a range of (4.05n_{A} + 1.4n_{C})V or more and (4.15n_{A} + 1.4n_{C})V or less.

23. The method of controlling a cell assembly according to any one of claims 13 to 22, further comprising:
a step of calculating a quantity of electricity that is required for the forced discharge from the forced discharge start voltage Va and the forced discharge end voltage Vb; and
a step of performing the forced discharge for a predetermined period at a predetermined current value.

24. The method of controlling a cell assembly according to any one of claims 13 to 23, wherein an alkaline storage battery is used as the second cell.
